# EUROPEAN PATENT APPLICATION

(11) **EP 4 434 612 A1**
(43) Date of publication of application: **25.09.2024**
(21) Application number: 23163516.0
(22) Date of filing: 22.03.2023
(51) Int. Cl.: B01D 67/00, B01D 71/14, B01D 71/22, B01D 61/14

(54) **THERMAL TREATMENT OF ULTRAFILTRATION MEMBRANES**

(71) Applicant: Sartorius Stedim Biotech GmbH, 37079 Göttingen (DE)
(72) Inventor: Schleuß, Tobias, 37434 Wollbrandshausen (DE)
(74) Representative: Müller-Boré & Partner Patentanwälte PartG mbB

(57) **Abstract**

The present invention relates to a method for treating an ultrafiltration membrane, a method for producing an ultrafiltration membrane comprising the treatment method, as well as ultrafiltration membrane obtained by the treatment method or the production method.

## Description

The present invention relates to a method for treating an ultrafiltration membrane, a method for producing an ultrafiltration membrane comprising the treatment method, as well as ultrafiltration membrane obtained by the treatment method or the production method.

A classification of filtration membranes is carried out according to IUPAC based on their retentive properties and pore sizes. Based on this recommendation the average pores sizes of 0.1 µm to 10 µm are typically classified as microfiltration membranes, ultrafiltration membranes are those with average pore sizes of 0.01 to 0.1 µm, nanofiltration membranes have an average pore size of 0.001 to 0.01 µm, and membranes having average pore sizes below 0.001 µm are typically referred to as reverse osmosis membranes (cf. Shang-Tian Yang, Bioprocessing for Value-Added Products from Renewable Resources, 2007).

A similar classification can be performed by retention of the membrane for a specific molecule, since precise pore size determination for narrow membranes like ultrafiltration, nanofiltration, or reverse osmosis membranes is much more difficult and thereby more prone to failure than for more open membranes, such as microfilters. Typical retention measurement of ultrafiltration membranes is performed using protein or other suitable molecules mimicking typical processes. Another method is the determination of sieve curves or sieve coefficients using a broadly distributed polymer. Such a method can be applied to a wider range of pore sizes and is not limited to one type of membrane, such as described in ASTM E 1343-90.

Precipitation casting is a method to produce filtration membranes ranging from reverse-osmosis membranes or ultrafiltration membranes to microfiltration membranes. During the precipitation, in a thermodynamic and kinetic process the solvent of a polymer solution is exchanged by a nonsolvent from a coagulation bath and the porous structure is formed (cf. "Basic Principles of Membrane Technology" 2nd Ed., Marcel Mulder, pp. 77 ff). Amongst others, the applied solvent plays a crucial role in the formation of the porous structure of the membrane. A particular solvent allows the creation of membranes with specific characteristics with respect to retention and flux.

Over the last years, certain countries/regions issued regulations concerning the manufacture and importing of chemical substances as well as the use thereof (e.g. EU regulation REACH dated 2006). REACH for example also addresses the continued use of chemical substances of very high concern (SVHC) because of their potential negative impacts on human health and/or the environment. Some solvents regularly used for the production of ultrafiltration membranes could fall under this category. Some uses of SVHCs may be subject to prior authorization from the European Chemicals Agency, and applicants for authorization will have to include plans to replace the use of the SVHC with a safer alternative.

However, the finding of alternative solvents for the production of ultrafiltration membranes based on a thermoplastic polymer turns out to be quite difficult. It has been found that by means of alternative solvents it was frequently not possible to produce ultrafiltration membranes with the same performance regimes as before the replacement of the solvent. Therefore, there is a high demand to adapt/modify the method for producing filtration membranes, in particular via precipitation casting.

Retention and flux are determined by different structural properties of the membrane. The retention is determined by the size of the smallest pores in the membrane body. For ultrafiltration membranes, these are located at the top layer (skin layer). The flux is determined by the pore size (gradient) in the whole membrane body including the skin layer. Relatively high flux at a given retention profile can especially be achieved by a membrane with a high degree of asymmetry having small pores in the desired range at the membrane skin layer followed by a steep gradient to larger pores to the bottom layer.

To a certain extent, the pore size at the skin layer as well as the pore size gradient can be tailored by the properties of the polymer solution and the membrane production process. Such processes are well known to the expert and described in textbooks (e.g. "Basic Principles of Membrane Technology", Marcel Mulder, 2nd Ed. p.77 ff*.*)*.* However, the achievable ratio of retention to flux is commonly limited by the thermodynamic and kinetic aspects of the membrane formation itself. The pore size at each position within the membrane is determined by the polymer content in the casting solution at the onset of phase separation as well as the coalescence time between the onset of phase separation and the solidification of the membrane body. Therefore, a known approach to achieve small pores at the membrane skin layer as well as larger pores in the membrane body is to use two-layered polymer solutions for membrane formation, namely a thin layer of a solution containing a high amount of polymer to form the skin layer as well as a larger layer of a solution containing low amount of polymer to form larger pores in the membrane body (as for example disclosed in EP 4 003 579 A1). Such approaches, however, are laborious as a precise control of layer thickness as well as twice the amount of mixing, pumping and layering technology is needed.

Thus, the technical problem underlying the present invention is to provide an ultrafiltration membrane which has an improved ratio of rejection to permeability in an efficient and fast way and preferably without applying chemical substances of very high concern or preferably avoiding inclusion of the same in the final ultrafiltration membrane.

The solution to the above technical problem is achieved by the embodiments characterized in the claims.

In particular, the present invention relates to a method for treating an ultrafiltration membrane, comprising the steps of:
providing an ultrafiltration membrane comprising a thermoplastic polymer, and
thermally treating the ultrafiltration membrane at a temperature from at least 110°C to lower than the glass transition temperature of the thermoplastic polymer.

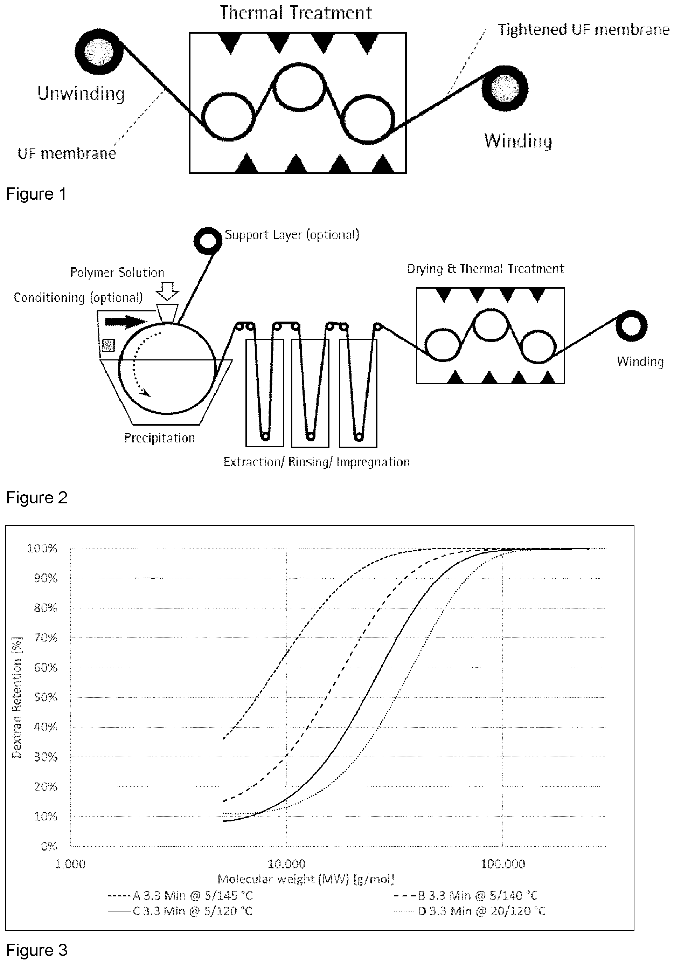

By the method of the present invention it is possible to alter the properties of an ultrafiltration membrane based on a thermoplastic polymer (fully rinsed and dried) towards a higher retention by heat treating (thermally treating) the ultrafiltration membrane at elevated temperatures. The process is schematically illustrated in Figure 1. Temperatures used for heat treating the membrane are close to but below the glass transition temperature (T_{g}) of the thermoplastic polymer. Without being bound to this theory, it is believed that it is possible to temporarily increase the chain mobility of the polymer and thereby induce a relaxation of chain tension resulting in a tighter arrangement of chains, since polymer parts with similar properties arrange together. A common method to determine T_{g} of a polymer is described in ASTM E1356, which "covers the assignment of the glass transition temperatures of materials using differential scanning calorimetry or differential thermal analysis". Due to the very dense polymer alignments in the so-called skin layer of an ultrafiltration membrane, a narrowing of even those pores in the nanometer region can be achieved, which results higher retention (lower cut-off) of the membrane. Thereby, a significant alteration of the microporous sub structure, where polymer chains or domains are further apart and cannot interact on a molecular level, can preferably be avoided.

Preferably, no toxic solvents or other substances of very high concern have been used during the production of the ultrafiltration membrane. Reduction of production cost due to the new process design is preferably possible, since it is possible to treat ultrafiltration membranes obtained by a single layer casting process.

In the present invention the term "ultrafiltration membrane" refers to a membrane having an MWCO of 1 kDa to 1000 kDa. The determination of the molecular weight cut-off can be carried out in accordance with the US standard ASTM E1343-90 ("Standard test method for molecular weight cutoff evaluation of flat sheet ultrafiltration membranes"). Typically the Cut-Off 90 (90% of the molecules of a given size are retained) is used to determine the molecular weight cut-off (MWCO) of an ultrafiltration membrane.

For pore sizes of at least 0.1 µm, i.e. for microfiltration membranes with an average pore size of 0.1 to 10 µm, capillary flow porometry is used to determine the pore size. This is a gas/liquid porosimetry in which the differential gas pressures and flow rates through a membrane sample are measured first in the wet and then in the dry state. Prior to measurement, the membrane sample is brought into contact with a wetting liquid in such a way that all pores are filled with this liquid. After the pores have been filled and the sample has been introduced, the measuring cell must be closed and the measurement started. After starting the measurement, the gas pressure is automatically and gradually increased and the pore diameters corresponding to the applied pressure are emptied by the gas pressure. This is continued until the relevant pore range has been covered, i.e. until even the smallest pores present in the measuring range have been freed of liquid. The pressure is then reduced again and the measurement is repeated automatically on the now dry sample. The pore size distribution is calculated from the difference between the two pressure-flow rate curves using the Young-Laplace equation (see also A. Shrestha, "Characterization of porous membranes via porometry", 2012, Mechanical Engineering Graduate Theses & Dissertations, Paper 38, University of Colorado at Boulder).

For the determination of pore sizes larger than 10 µm and up to 1 mm, the image analysis based method described in Journal of Membrane Science 372 (2011), pages 66 to 74, can be used.

For pore sizes less than 0.1 µm, cut-offs are determined by filtering model substances and generating sieve curves indicating cut-off behavior of the membranes over a range of molecular weights (cf. ASTM E1343-90).

In accordance with the present invention, the treatment method comprises the step of providing an ultrafiltration membrane comprising a thermoplastic polymer. The provided ultrafiltration membrane is preferably an ultrafiltration membrane, which has been produced prior to the treatment method within the same process, which may save additional winding/unwinding and maybe further handling. Accordingly, drying steps and/or preservations steps, where necessary, have already been carried out with said ultrafiltration membrane. Suitable production methods for producing ultrafiltration membranes are known in the art. For example, a respective ultrafiltration membrane can be produced as described in "Basic Principles of Membrane Technology" 2nd Ed., Marcel Mulder, pp. 89 ff. Preferably, the ultrafiltration membrane has been prepared by precipitation casting, more preferably by single polymer layer precipitation casting.

The thermoplastic polymer(s) contained in the ultrafiltration membrane are not subject to any special restrictions. Use may therefore be made of any one or more thermoplastic polymers suitable for membrane formation. The thermoplastic polymer can for example be selected from the group consisting of cellulosic ester (such as cellulose acetate (cellulose monoacetate, cellulose diacetate, cellulose triacetate), cellulose propionate, cellulose butyrate, cellulose acetate butyrate, cellulose nitrate), cellulose ether (such as methyl cellulose and ethyl cellulose), Nylon 6, Nylon 6,6, polyethersulfone, and polysulfone. The ultrafiltration membrane may comprise one or more, preferably one, of these polymers. More preferably, the polymer layer comprises a cellulose ester based polymer, preferably a cellulose acetate, more preferably consists of a single cellulose diacetate.

Drying steps, where necessary, have already been carried out with the ultrafiltration membrane. Accordingly, the ultrafiltration membrane is preferably a dry ultrafiltration membrane. A dry membrane being defined as a membrane with a residual humidity of less than 20 wt-% H₂O, preferably of less than 15 wt-% H₂O and most preferred of less than 10 wt-% H₂O. Drying steps are commonly known in the art and are for example contacting the membrane with a hot surface (drum or plate), hot air stream, for example at temperatures from 60 to 110°C to ensure removal off excess water or drying in vacuum at even lower temperatures.

Preservation steps, where necessary, have already been carried out with the ultrafiltration membrane. Accordingly, the ultrafiltration membrane is preferably an ultrafiltration membrane treated with a preservative and/or a pore filler. Preservations steps are commonly known in the art and are for example drying from glycerol solution, preserving with alcoholic solution, with caustic soda or a solution containing sodium azide. The respective ultrafiltration membranes contain a preservative for preventing pores from collapsing. In case the membrane is dried, the preservative needs to remain in the narrow pores. Moreover, a preservative can be contained for promoting hydrophilicity of the membrane (especially for hydrophobic polymers like polyethersulfone) (cf. for example S. Arénillas et al., Journal of Membrane Science and Research 3 (2017) pp. 102-108).

The ultrafiltration membrane may comprise a support layer (supported ultrafiltration membrane). The thermoplastic polymer can be present on and/or partially or completely in the support layer. For example, the thermoplastic polymer layer may be present in the support layer to an extent of at least 25 Vol-%, preferably at least 50 Vol-%, more preferably at least 75 Vol-%. Preferably, the polymer layer penetrates into the support layer to an extent of less than 100 Vol-%.

The support layer is not particularly limited. It is possible, therefore, to use all support layers known to the skilled person from the prior art. For example, the support layer may be a nonwoven web, a woven fabric or an open microfilter membrane. Examples of nonwoven webs are polyolefin nonwovens, such as, for example, PP/PE core-shell nonwovens, and polyester nonwovens. The support layer is preferably a polyolefin nonwoven or a polyolefin membrane.

The ultrafiltration membrane may be transported by means of a carrier or by means of transporting mechanisms, which are not subject to any special limitation. Any carrier suitable for membrane production methods from the prior art may be used. The carrier preferably has a planar surface and is inert with respect to the substances used during membrane formation. Serving preferably as carrier is a moving belt (conveyor belt), preferably made of steel. As transporting mechanisms, there can for example be used unwinding and upwinding rolls and optionally transport rolls.

In accordance with the present invention, the treatment method further comprises the step of thermally treating the (provided) ultrafiltration membrane at a temperature from at least 110°C to lower than the glass transition temperature of the thermoplastic polymer (or to lower than the glass transition temperature of the thermoplastic polymer mixture in case more than one thermoplastic polymer is contained). The applied temperature during the thermal treatment can be chosen depending on the thermoplastic polymer of the membrane and the desired level of tightening. For example, a higher (lower) temperature can be chosen for a higher (lower) level of tightening. The temperature in the thermal treatment step is preferably from 130°C to 160°C, more preferably from 135 to 150 °C, and most preferably from 140°C to 145 °C.

The duration of the thermal treatment step (dwelling time) is not particularly limited and can be chosen depending on the temperature applied to the membrane and the desired level of tightening. For example, a longer duration can be chosen when applying lower temperatures and *vice versa* and/or a longer (shorter) duration can be chosen for a higher (lower) level of tightening. For example, the thermal treatment step is carried out for a duration of from 10 s to 10 min, preferably from 30 s to 5.0 min, and most preferably from 60 s to 3.0 min.

The means for carrying out the thermal treatment step are not particularly limited and commonly known means for thermal treatment can be applied. For example, the thermal treatment step can be carried out by applying one or more of the group selected from a hot surface with direct contact to the membrane, a hot air stream, and irradiation with infrared rays. The thermal treatment step is preferably carried out at the skin layer (surface) of the ultrafiltration membrane. Preferably, a ratio of a Cut-Off 90 at the skin layer after thermal treatment to a Cut-Off 90 at the skin layer before thermal treatment is at least 1.0:1.5, more preferably at least 1.0:2.0, more preferably at least 1.0:3.0, most preferably at least 1.0:4.0.

The thermal treatment step is preferably only applied to the skin (tight) layer/top layer surface of the membrane. More preferably, the side (surface) of the membrane opposite to the skin (tight) layer/top layer is not thermally treated or is cooled, while the thermal treatment is carried out. Suitable cooling means are known in the art. A better effect with respect to the flux to retention ratio of the ultrafiltration membrane is observed, when the thermal treatment is applied from the skin layer side and the membrane body portion is less affected by the heat.

The thermal treatment step can be carried out to a different extent along the length of the membrane, e.g. by varying the temperature and/or duration for different locations, e.g. gradually or stepwise, preferably gradually. Thereby, a variation of the pore size can not only be achieved in the thickness direction, but also in the longitudinal direction of the membrane. Preferably, the thermal treatment step is equally carried out along the length of the membrane.

A further aspect of the present invention relates to a method for producing an ultrafiltration membrane comprising the treatment method of the invention. The above definitions and embodiments apply analogously for this aspect of the present invention. The following definitions and embodiments apply likewise analogously for the treatment method of the invention.

Preferably, the membrane is produced applying REACH materials in a low amount or no REACH materials at all. Thereby, a membrane with content of REACH materials below detectable limits or with no REACH materials can preferably be obtained.

REACH is a European regulation, which aims to improve the protection of human health and the environment from the risks that can be posed by chemicals. On basis of this regulation by ECHA (European Chemical Agency) the production and/or use of certain substances is forbidden in the European Union or strictly limited. Some substances are prone to be or most likely to be forbidden. These "candidates" are also unfavorable for use. Herein, the term "REACH materials" refers to both types of materials already forbidden ones as well as potential candidates. The term "non REACH" implies the beneficial state of a substance (solvent) not being registered as material of concern. Examples of current beneficial solvents are acetic acid, acetone, N-n-butyl-2-pyrrolidone, dihydrolevoglucosenone, ethanol, isopropanol, ethyl formate, glycerol, glycerol-1,3-diacetate, glycerol triacetate, methyl acetate, 2-hydroxy-N,N-dimethylpropanamide, 2-pyrrolidone, 2,2-dimethyl-1,3-dioxolane-4-methanol, tetrahydrofuran, and water. The term "detectable content" means a content of 50 µg/mL or more, e.g. after extraction with 1 mL extraction liquid (e.g. water or ethanol) on 6 cm² membrane surface after 24h at a temperature of 60°C to 80°C.

A further aspect of the present invention relates to an ultrafiltration membrane obtained by the treatment method of the invention or by the production method of the invention. The above definitions and embodiments apply analogously for this aspect of the present invention. The following definitions and embodiments apply likewise analogously for the methods of the invention. The ultrafiltration membrane of the invention is preferably a flat membrane.

The methods of the present invention are able to achieve a higher polymer concentration at the membrane skin layer of the final membrane and a more asymmetric membrane structure. This preferably yields to rejection rates at higher membrane permeability enabling faster separation processes.

The ultrafiltration membrane of the invention preferably comprises a skin layer and an asymmetrical membrane body portion, adjacent to the skin layer. The skin layer corresponds to the part of the ultrafiltration membrane which has been thermally treated. The skin layer and the membrane body portion are continuous within the membrane (i.e. with no (defined) interfaces). A first part of the membrane body portion, which is adjacent to the skin layer, has an average pore size smaller than an average pore size of a second (opposite) part of the membrane body portion, and the average pore size (continuously or discontinuously) increases from the first part towards the second part of the asymmetrical membrane body portion. A ratio of average pore size between the first part and the second part of the membrane body portion (average pore size of the first part of the membrane body portion/average pore size of the second part of the membrane body portion) is preferably at least 1:10, more preferably at least 1:20, most preferably at least 1:50. An average pore size of the skin layer is smaller than an average pore size of the first part of the membrane body portion. The asymmetrical membrane body portion is preferably homogeneous, i.e. (substantially) free of macrovoids.

As used herein, an asymmetrical membrane portion is a membrane portion, in which a first part of the asymmetrical membrane portion has an average pore size smaller than the average pore size of the (opposite) second part of the asymmetrical membrane portion, and the average pore size (continuously or discontinuously) increases from the first part towards the second part of the asymmetrical membrane portion.

The skin layer may correspond to 5% or less, preferably 4% or less, more preferably 3% or less, (excluding 0.0%) of the (total) thickness of the membrane. The membrane body portion may correspond to 95% or more, preferably 96% or more, more preferably 97% or more, (excluding 100%) of the (total) thickness of the membrane. Preferably, the ultrafiltration membrane consists of the skin layer and the membrane body portion. The membrane body portion includes the optional support layer.

The skin layer may have a thickness of from 0.5 µm to 10 µm, preferably from 0.5 µm to 5.0 µm, more preferably from 1.0 µm to 3.0 µm.

The membrane body portion may have a thickness of from 70 µm to 390 µm, preferably from 90 µm to 345 µm, more preferably from 100 µm to 250 µm.

The membrane may have a total thickness of from 80 µm to 400 µm, preferably from 100 µm to 350 µm, more preferably from 120 µm to 280 µm.

Preferably, the membrane does not contain REACH materials in a detectable content and more preferable does not contain any REACH materials.

There is no particular limitation on the possible use of the membrane of the invention. It may be used for filtration, more particularly for the filtration of viruses, proteins or macromolecules in crossflow applications like ultrafiltration and diafiltration applications or in static filtration.

A further aspect of the present invention relates to the use of thermal treatment means for reducing the pore size in a skin layer of an ultrafiltration membrane comprising a thermoplastic polymer, wherein thermal treatment is carried out on the ultrafiltration membrane at a temperature of at least 110°C to lower than the glass transition temperature of the thermoplastic polymer. The above definitions and embodiments apply analogously for this aspect of the present invention.
- Fig. 1:: Schematic representation of an exemplary standalone thermal treatment method of the invention. An ultrafiltration membrane is thermally treated in a continuous process thereby controlled heat is e.g. applied by contact with heated surfaces, by direct thermal irradiation (infrared) or by dwelling in a hot chamber (air) for a defined period of time.
- Fig. 2:: Schematic representation of a thermal treatment integrated in a typical membrane production process of ultrafiltration membranes by precipitation casting (NIPS - non solvent induced phase separation). The thermal treatment of the present invention can e.g. be performed in a separate compartment within the machine or be part of a drying process.
- Fig. 3:: Based on one single casting solution it is shown how cut-off behavior of the membrane is influenced by casting conditions (D: precipitation at 20°C coagulation bath temperature, C precipitation at 5°C coagulation bath temperature) but especially by thermal post treatment (membrane fully rinsed and dried) (C: thermal treatment at 120°C for 3.3 min., B: thermal treatment at 140 °C for 3.3 min., A: thermal treatment at 145 °C for 3.3 min). A cut-off 90 range from 20kDa (A) to 30 kDa (B) and 50 kDa (C) was reached (D would represent 70 kDa, but was achieved by different casting conditions (= different precipitation bath temperatures)).

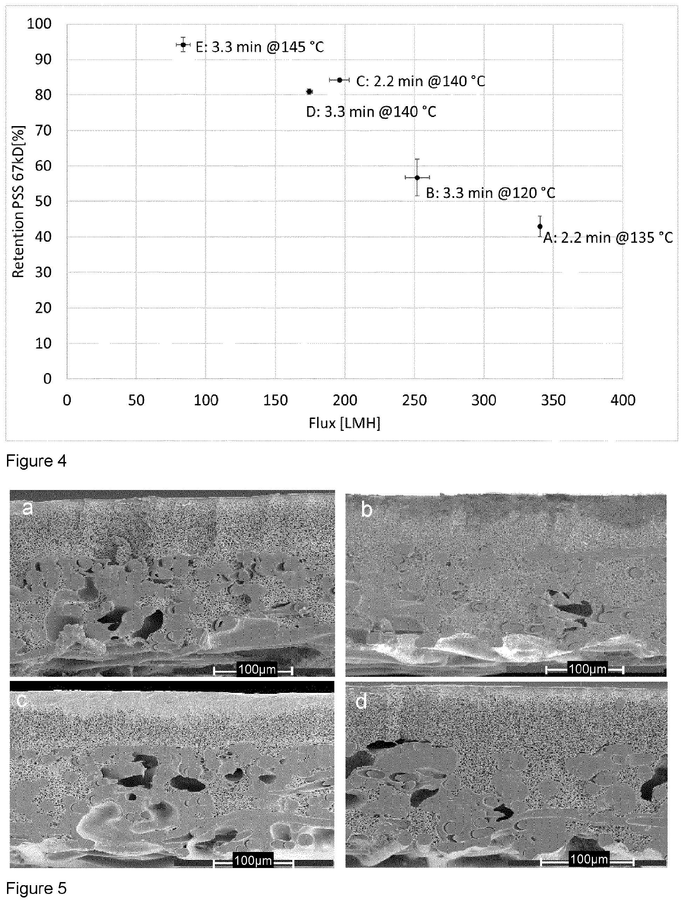

- Fig. 4:: Different thermal treatments of a cellulose membrane based on the same casting solution impacts the retention of polymer standard PSS (polystyrene sulfonate with nominal molar masses ranging from 1 to 67 kilodaltons (kDa)) *versus* Flux during concentration in crossflow filtration. Membranes A and C differ from membranes B, D and E in the coagulation bath temperature and post thermal treatment duration: A and C with precipitation at 20°C and thermal treatment for 2.2 min and B, D and E with precipitation at 5°C and thermal treatment for 3.3 min. The results in Fig. 4 indicate that thermal treatments at lower temperatures have only a lower impact on membrane behavior. At a (polymer) specific optimal temperature closer to T_{g} (glass transition temperature; here in case of cellulose diacetate approx. 145-150°C) the impact on the membrane is particularly significant: B → D → E/A → C.
- Fig. 5:: Scanning electron microscope (SEM) images showing cross sections through membrane A (a), membrane B (b), membrane D (c) and membrane E (d). SEM images show that by the post thermal treatment the overall structure remains substantially unaltered and that changes in membrane structure obviously occur within the retentive skin/top layer.

The present invention will be further illustrated in the following examples without being limited thereto.

### Example 1: Influence of the thermal treatment on the cut-off behaviour of a given membrane

Based on the determination of dextran sieve curves Fig. 3 shows how the behavior of a given membrane is shifted towards tighter cut-offs by thermal treatment of the initial membrane. Cellulose membranes produced by single casting and subsequent drying have been post-treated with different temperatures for a given time period (here 3.3 min). For membranes A, B, and C the same precipitation condition, in particular the same precipitation temperature (= coagulation bath temperatures; 5 °C), has been applied. The three sieve curves of A, B, and C given in Fig. 3 show that the membrane behavior is shifted to a lower cut-off 90 range with higher temperature of the post treatment. Membrane A with a post heat treatment at 145 °C shows a cut-off 90 range of 20 kDa, membrane B with a post heat treatment at 140 °C shows a cut-off 90 range of 30 kDa, and membrane C with a post heat treatment at 120 °C shows only a cut-off 90 range of 50 kDa.

Additionally, Fig. 3 shows that the membrane behavior can also be modified by changing the precipitation temperature whereby the lower the precipitation temperature, the tighter the membrane (i.e., the retention increases). This phenomenon is already well known (cf. Nevstrueva, Daria, et al. "Effect of precipitation temperature on the properties of cellulose ultrafiltration membranes prepared via immersion precipitation with ionic liquid as solvent." Membranes 8.4 (2018): 87.). However, Fig. 3, in particular the comparison of membranes C and D, shows that for given conditions (polymer concentration, solvent, non-solvent etc.) the modification through lowering precipitation temperature has physical and technical limits, since the viscosity is high at very low temperatures and can negatively affect the casting process. The comparison of membranes C (precipitation at 5 °C) and D (precipitation at 20 °C) also shows that the tightening effect is less pronounced relative to the effect achieved by post thermal treatment.

With respect to the post thermal treatment it should be noted that beside the temperature also the duration of the treatment can be varied. Longer thermal treatment results in a higher retention of the membrane.

### Example 2: Influence of the thermal treatment on retention and flux of a given membrane

The impact of different temperatures and dwelling times of the membrane at these temperatures on membrane properties related to retention and flux have been investigated. Membranes A and C differ from membranes B, D and E in the coagulation bath temperature and post thermal treatment duration and temperature. A and C with precipitation at 20°C and thermal treatment at 135°C and 140°C, respectively, for 2.2 min and B, D and E with precipitation at 5°C and thermal treatment at 120°C, 140°C, and 145°C, respectively, for 3.3 min.

A comparison of membranes B, D and E as well as of membrane A with membrane C shows that an increase of temperatures of the post thermal treatment (from 120 °C to 145 °C, and from 135 °C to 140 °C, respectively) causes a gradually tightening of the membrane, demonstrated by increasing retention and in parallel reducing the flux over the membrane (cf. Fig. 4).

Importantly, the overall structure remains similar as indicated by SEM images (see Figure 5). Changes must occur within the retentive skin/top layer whose ultrafine structure is not resolvable by SEM. Thereby, the asymmetry of the ultrafiltration membrane can be further manipulated and improved.

## Claims

1. A method for treating an ultrafiltration membrane, comprising the steps of:
providing an ultrafiltration membrane comprising a thermoplastic polymer, and
thermally treating the ultrafiltration membrane at a temperature from at least 110°C to lower than the glass transition temperature of the thermoplastic polymer.

2. The treatment method according to claim 1, wherein the thermoplastic polymer is selected from the group consisting of cellulosic ester, cellulose ether, Nylon 6, Nylon 6,6, polyethersulfone, and polysulfone as well as a mixture of at least two of said thermoplastic polymers.

3. The treatment method according to claim 1 or 2, wherein the ultrafiltration membrane is a dry ultrafiltration membrane.

4. The treatment method according to any one of claims 1 to 3, wherein the ultrafiltration membrane is an ultrafiltration membrane treated with a preservative and/or a pore filler.

5. The treatment method according to any one of claims 1 to 4, wherein the temperature in the thermal treatment step is from 130°C to 160°C.

6. The treatment method according to any one of claims 1 to 5, wherein thermal treatment step is carried out for a duration of from 10 s to 10 min.

7. The treatment method according to any one of claims 1 to 6, wherein the thermal treatment step is carried out by applying one or more of the group selected from a hot surface with direct contact to the membrane, a hot air stream, and irradiation with infrared rays.

8. The treatment method according to any one of claims 1 to 7, wherein the thermal treatment step is only applied to a skin layer surface of the membrane.

9. The treatment method according to claim 8, wherein the side of the membrane opposite to the skin layer is cooled, while the thermal treatment is carried out.

10. The treatment method according to any one of claims 1 to 9, wherein a ratio of a Cut-Off 90 at a skin layer of the membrane after thermal treatment to a Cut-Off 90 at a skin layer of the membrane before thermal treatment is at least 1.0:1.5.

11. A method for producing an ultrafiltration membrane comprising the treatment method according to any one of claims 1 to 10.

12. An ultrafiltration membrane obtained by the treatment method according to any of claims 1 to 10 or by the production method according to claim 11.

13. The ultrafiltration membrane according to claim 12, wherein the membrane comprises a skin layer and an asymmetrical membrane body portion, adjacent to the skin layer,
the skin layer and the membrane body portion are continuous within the membrane; a first part of the membrane body portion, which is adjacent to the skin layer, has an average pore size smaller than an average pore size of a second part of the membrane body portion, and the average pore size increases from the first part towards the second part of the asymmetrical membrane body portion; and
an average pore size of the skin layer is smaller than an average pore size of the first part of the membrane body portion.

14. The ultrafiltration membrane according to claim 13, wherein a ratio of average pore size between a first part of the membrane body portion, which is adjacent to the skin layer, and a second opposite part of the membrane body portion is at least 1:10.

15. The ultrafiltration membrane according to any one of claims 12 to 14, wherein the membrane does not contain REACH materials.

16. Use of thermal treatment means for reducing the pore size in a skin layer of an ultrafiltration membrane comprising a thermoplastic polymer, wherein thermal treatment is carried out on the ultrafiltration membrane at a temperature from at least 110°C to lower than the glass transition temperature of the thermoplastic polymer.
